# EUROPÄISCHE PATENTSCHRIFT

(11) **EP 3 206 925 B1**
(45) Veröffentlichungstag und Bekanntmachung des Hinweises auf die Patenterteilung: **11.03.2020**
(21) Anmeldenummer: 15784279.0
(22) Anmeldetag: 15.10.2015
(51) Int. Cl.: B60W 20/50

(54) **VERFAHREN ZUM BETREIBEN EINER HYBRIDANTRIEBSEINRICHTUNG SOWIE ENTSPRECHENDE HYBRIDANTRIEBSEINRICHTUNG**
METHOD FOR OPERATING A HYBRID DRIVE DEVICE AND CORRESPONDING HYBRID DRIVE DEVICE
PROCÉDÉ PERMETTANT DE FAIRE FONCTIONNER UN DISPOSITIF D'ENTRAÎNEMENT HYBRIDE ET DISPOSITIF D'ENTRAÎNEMENT HYBRIDE CORRESPONDANT

(30) Priorität: 18.10.2014 DE 102014015469
(43) Veröffentlichungstag der Anmeldung: 23.08.2017
(73) Patentinhaber: Audi AG, 85045 Ingolstadt (DE)
(72) Erfinder: ADAM, Martin, 01662 Meissen (DE); SCHLEDERER, Stefan, 85104 Pförring (DE)
(86) Internationale Anmeldenummer: PCT/EP2015/002041
(87) Internationale Veröffentlichungsnummer: WO 2016/058698

(56) Entgegenhaltungen:
- JP-A- 2006 094 669
- JP-A- 2010 220 374
- US-A1- 2012 203 408
- US-A1- 2014 095 017

## Beschreibung

Die Erfindung betrifft ein Verfahren zum Betreiben einer Hybridantriebseinrichtung, die eine Brennkraftmaschine sowie eine mit der Brennkraftmaschine wirkverbindbare oder wirkverbundene, als Motor und als Generator betreibbare elektrische Maschine aufweist, wobei in einer Normalbetriebsart eine Temperatur der elektrischen Maschine mittels eines Temperatursensors ermittelt wird . Die Erfindung betrifft weiterhin eine Hybridantriebseinrichtung.

Die Hybridantriebseinrichtung dient beispielsweise dem Antreiben eines Kraftfahrzeugs, also dem Bereitstellen eines auf das Antreiben des Kraftfahrzeugs gerichteten Drehmoments. Die Hybridantriebseinrichtung verfügt über mehrere Antriebsaggregate, insbesondere mindestens zwei Antriebsaggregate, welche vorzugsweise unterschiedlicher Art sind. Beispielsweise ist ein erstes Antriebsaggregat als Brennkraftmaschine und ein zweites Antriebsaggregat als elektrische Maschine ausgestaltet. Die elektrische Maschine ist mit der Brennkraftmaschine wirkverbindbar oder wirkverbunden. Insbesondere ist also eine Kupplung zwischen der elektrischen Maschine und der Brennkraftmaschine vorgesehen, mittels welcher eine Wirkverbindung zwischen den Antriebsaggregaten hergestellt werden kann.

Beispielsweise ist es vorgesehen, dass die elektrische Maschine permanent mit einer Abtriebswelle der Hybridantriebseinrichtung wirkverbunden ist, während die Brennkraftmaschine mittels der Kupplung von der Abtriebswelle entkoppelt werden kann. Entsprechend kann es vorgesehen sein, dass die Brennkraftmaschine und die elektrische Maschine das Abtriebsmoment der Hybridantriebseinrichtung, welches an der Abtriebswelle anliegt, zumindest zeitweise gemeinsam bereitstellen. Im Rahmen der vorstehend beschriebenen Ausführungsform kann das Abtriebsmoment jedoch auch lediglich mittels der elektrischen Maschine, also ohne Beteiligung der Brennkraftmaschine, erzeugt werden.

Die elektrische Maschine ist sowohl als Motor als auch als Generator betreibbar. In beiden Fällen stellt sie ein Drehmoment bereit, welches im Falle des Motors positiv ist, also auf eine Beschleunigung der Abtriebswelle gerichtet ist, während das Drehmoment negativ ist, wenn sie als Generator betrieben wird. In letzterem Fall stellt die elektrische Maschine elektrische Energie bereit, beispielsweise für ein Bordnetz des Kraftfahrzeugs.

Die Hybridantriebseinrichtung verfügt vorzugsweise über wenigstens einen Energiespeicher, insbesondere eine Batterie, in welchem die elektrische Energie zwischenspeicherbar ist. Ebenso kann es vorgesehen sein, dass mehrere unterschiedliche Bordnetze vorliegen, beispielsweise ein Hochvoltbordnetz und ein Niedervoltbordnetz, wobei in dem Hochvoltbordnetz eine höhere Spannung vorliegt als in dem Niedervoltbordnetz. Das Hochvoltbordnetz und das Niedervoltbordnetz können über einen Spannungswandler elektrisch miteinander verbunden sein. Vorzugsweise dient der Spannungswandler dazu, das Niedervoltbordnetz mit elektrischer Energie aus dem Hochvoltbordnetz zu versorgen beziehungsweise zu stützen. Entsprechend ist der Energiespeicher vorteilhafterweise dem Hochvoltbordnetz zugeordnet und wird mit der Spannung des Hochvoltbordnetzes betrieben.

Insbesondere bei Bereitstellen eines großen Drehmoments im Falle eines Motorbetriebs der elektrischen Maschine oder einer hohen elektrischen Leistung im Falle eines Generatorbetriebs fällt in der elektrischen Maschine eine hohe Wärmemenge an. Das bedeutet, dass ihre Temperatur üblicherweise rasch zunimmt, wobei der Temperaturanstieg insbesondere von einer Umgebungstemperatur abhängt. Der Betrieb der elektrischen Maschine wird bevorzugt jedoch lediglich in einem bestimmten Temperaturbereich zugelassen, um eine Beschädigung der elektrischen Maschine zu verhindern. Insbesondere kann es bei einer hohen Temperatur der elektrischen Maschine zu einer Beschädigung einer Wicklung oder anderer Komponenten der elektrischen Maschine kommen.

Aus diesem Grund verfügt die elektrische Maschine über den Temperatursensor, mittels welchem ihre Temperatur bestimmt werden kann. Der Temperatursensor steht dabei insbesondere in Wärmeübertragungsverbindung zu besonders kritischen Bereichen der elektrischen Maschine. Der Betrieb der elektrischen Maschine soll nunmehr zumindest in der Normalbetriebsart nur dann zugelassen werden, wenn die mittels des Temperatursensors ermittelte Temperatur kleiner als eine vorgegebene Maximaltemperatur ist. Die Maximaltemperatur wird dabei so festgelegt, dass auch bei dauerhaftem Betrieb der elektrischen Maschine bei einer der Maximaltemperatur entsprechenden Temperatur kein Ausfall beziehungsweise keine Beschädigung der elektrischen Maschine zu erwarten ist. Es kann zusätzlich oder alternativ vorgesehen sein, dass das von der elektrischen Maschine erzeugte Drehmoment auf ein Maximalmoment begrenzt wird, welches aus der mittels des Temperatursensors ermittelten Temperatur bestimmt wird.

Aus dem Stand der Technik ist beispielsweise die Druckschrift US 2012/0203408 A1 bekannt. Diese betrifft eine Diagnoseeinrichtung für ein Kraftfahrzeug, die über einen ersten Temperatursensor verfügt, mittels welchem die Temperatur eines Hinterradantriebsmotors ermittelbar ist.

Weiterhin ist aus dem Stand der Technik die Druckschrift JP 2006-94669 A bekannt.

Es ist nun Aufgabe der Erfindung, ein Verfahren zum Betreiben einer Hybridantriebseinrichtung vorzuschlagen, welches gegenüber bekannten Verfahren Vorteile aufweist, insbesondere besonders zuverlässig und effektiv eine Beschädigung der elektrischen Maschine durch Übertemperatur verhindert.

Dies wird erfindungsgemäß mit einem Verfahren mit den Merkmalen des Anspruchs 1 erreicht. Dabei ist vorgesehen, dass ein Betrieb der elektrischen Maschine nur dann zugelassen wird, wenn die Temperatur kleiner als eine vorgegebene Maximaltemperatur ist, wobei bei einem Defekt des Temperatursensors eine Notfallbetriebsart durchgeführt wird, in welcher ein Betrieb der elektrischen Maschine nur mit begrenzter Leistung, begrenztem Drehmoment und/oder über eine begrenzte Zeitspanne zugelassen wird, wobei die begrenzte Leistung, das begrenzte Drehmoment und/oder die begrenzte Zeitspanne in Abhängigkeit von wenigstens einer Umgebungsgrößer ermittelt werden/wird. Der Defekt des Temperatursensors kann zahlreiche Ursachen haben. Beispielsweise ist unter dem Defekt des Temperatursensors ein defektes Messelement des Temperatursensors, eine defekte Zuleitung und/oder ein schadhafter Anschluss, beispielsweise an ein Steuergerät, zu verstehen. Auch eine zu große Messungenauigkeit des Temperatursensors kann als Defekt angesehen werden.

Beispielsweise ist es vorgesehen, zumindest einmalig, insbesondere jedoch periodisch, eine Diagnose des Temperatursensors durchzuführen. Dies geschieht vorzugsweise mithilfe eines Steuergeräts, an welcher der Temperatursensor angeschlossen ist. Wird im Rahmen der Diagnose wenigstens eines der vorstehend genannten Kriterien erfüllt, so wird auf den Defekt des Temperatursensors erkannt. Ist dies der Fall, so wird die Notfallbetriebsart durchgeführt beziehungsweise aus der Normalbetriebsart in die Notfallbetriebsart umgeschaltet.

In der Notfallbetriebsart soll der Betrieb der elektrischen Maschine nur mit bestimmten Betriebsparametern zugelassen werden, nämlich mit begrenzter Leistung, begrenztem Drehmoment und/oder über eine bestimmte Zeitspanne hinweg. Unter der begrenzten Leistung und dem begrenzten Drehmoment ist dabei eine Leistung beziehungsweise ein Drehmoment zu verstehen, welche/welches vorzugsweise kleiner ist als eine Maximalleistung beziehungsweise ein Maximaldrehmoment der elektrischen Maschine. Als Maximalleistung beziehungsweise Maximaldrehmoment können in diesem Fall die Auslegungsleistung beziehungsweise das Auslegungsdrehmoment der elektrischen Maschine herangezogen werden.

Unter dem Betrieb der elektrischen Maschine über die begrenzte Zeitspanne hinweg ist zu verstehen, dass kein dauerhafter Betrieb der elektrischen Maschine zugelassen wird. Vielmehr wird beispielsweise unmittelbar zu Beginn des Betriebs der elektrischen Maschine ein Zeitnehmer gestartet, mittels welchem der Zeitraum ermittelt wird, über welchen die elektrische Maschine bislang betrieben wurde. Erreicht oder übersteigt die Länge dieses Zeitraums die begrenzte Zeitspanne, so wird der Betrieb der elektrischen Maschine beendet. Während der begrenzten Zeitspanne kann der Betrieb der elektrischen Maschine mit der Maximalleistung und/oder dem Maximaldrehmoment zugelassen sein. Alternativ wird eine Begrenzung gemäß der vorstehenden Beschreibung vorgesehen.

Mit einer solchen Vorgehensweise kann ein unzulässig hohes Ansteigen der Temperatur in der elektrischen Maschine effektiv verhindert werden, auch wenn der Temperatursensor aufgrund des Defekts nicht zur Verfügung steht.

Insbesondere wird ein Übersteigen einer maximal zulässigen Temperatur beziehungsweise der vorgegebenen Maximaltemperatur durch die Temperatur der elektrischen Maschine unterbunden, sodass eine Beschädigung der elektrischen Maschine ausgeschlossen ist. Die beschriebene Vorgehensweise hat den Vorteil, dass die elektrische Maschine bei defektem Temperatursensor nicht vollständig abgeschaltet wird, sondern trotz des Defekts für Anwendungen mit geringem Leistungsbedarf, geringem Drehmomentbedarf oder für solche, die innerhalb der begrenzten Zeitspanne durchgeführt werden können, zur Verfügung steht. Es ist also ein Notbetrieb der elektrischen Maschine vorgesehen.

Eine weitere Ausgestaltung der Erfindung sieht vor, dass bei Vorliegen eines Zündanlassschalters in einer Normalbetriebsstellung in der Notfallbetriebsart ein Abschalten der Brennkraftmaschine unterbunden wird. Der Zündanlassschalter dient dem Vorgeben einer bestimmten Betriebsart für die Hybridantriebseinrichtung. Beispielsweise liegt er als Zündschloss vor, in welcher ein Fahrer des Kraftfahrzeugs zu Betriebsbeginn einen Schlüssel einführt und mit diesem den gewünschten Betriebszustand vorgibt. Beispielsweise kann der Zündanlassschalter als erste Stellung eine Verriegelungsstellung aufweisen, in welcher ein Lenkradschloss und/oder eine Lenkradarretierung aktiv sind.

In einer zweiten Stellung ist eine Stromversorgung des Kraftfahrzeugs aktiviert, welche insbesondere ausschließlich aus dem Energiespeicher erfolgt. In der ersten Stellung wird vorzugsweise ausschließlich Zubehör des Kraftfahrzeugs mit elektrischer Energie versorgt, nicht also die Hybridantriebseinrichtung oder zumindest nicht die Brennkraftmaschine und die elektrische Maschine. In einer dritten Stellung ist eine Stromversorgung für die Brennkraftmaschine, insbesondere für eine Zündung der Brennkraftmaschine, eingeschaltet. Diese Stellung entspricht der Normalbetriebsstellung, welche während eines Fahrbetriebs des Kraftfahrzeugs permanent vorliegt. In einer vierten Stellung des Zündanlassschalters wird schließlich ein Anlassen der Brennkraftmaschine verursacht, insbesondere mittels der elektrischen Maschine.

Liegt der Zündanlassschalter in der Normalbetriebsstellung vor und läuft die Brennkraftmaschine, so wird bei einem Wechsel aus der Normalbetriebsart in die Notfallbetriebsart beziehungsweise einem Vorliegen der Notfallbetriebsart das Abschalten der Brennkraftmaschine verhindert. Entsprechend kann der Fahrbetrieb des Kraftfahrzeugs im Wesentlichen allein mithilfe der Brennkraftmaschine durchgeführt werden, das an der Abtriebswelle anliegende Drehmoment also im Wesentlichen allein mittels der Brennkraftmaschine erzeugt werden.

In einer weiteren Ausgestaltung der Erfindung ist vorgesehen, dass das begrenzte Drehmoment kleiner ist als ein Maximaldrehmoment und/oder ein Dauerbetriebsdrehmoment der elektrischen Maschine. Unter dem Maximaldrehmoment ist ein Drehmoment zu verstehen, welches mittels der elektrischen Maschine maximal erzeugt werden kann, insbesondere während eines kurzen Zeitraums. Das Maximaldrehmoment kann insoweit auch als Überlastdrehmoment bezeichnet werden. Das Dauerbetriebsdrehmoment dagegen bezeichnet ein Drehmoment der elektrischen Maschine, bei welchem diese permanent betrieben werden kann, ohne dass die Temperatur die maximal zulässige Temperatur beziehungsweise die Maximaltemperatur überschreitet. Das Dauerbetriebsdrehmoment kann insoweit - wie vorstehend beschrieben - in Abhängigkeit von der momentanen Temperatur der elektrischen Maschine und/oder von einer Umgebungstemperatur ermittelt werden. Alternativ kann das Dauerbetriebsdrehmoment jedoch auch konstant gewählt sein.

In einer besonders bevorzugten Ausgestaltung der Erfindung ist vorgesehen, dass die begrenzte Zeitspanne derart gewählt wird, dass zwar auch bei einem Betreiben der elektrischen Maschine mit dem Maximaldrehmoment die Temperatur der elektrischen Maschine kleiner als die Maximaltemperatur bleibt. Weil die momentane Temperatur der elektrischen Maschine nicht bekannt ist, muss die Zeitspanne abgeschätzt werden. Beispielsweise wird die Zeitspanne konstant vorgegeben, sodass insoweit bei üblichen Umgebungsbedingungen die Temperatur der elektrischen Maschine auch bei einem Betreiben mit dem Maximaldrehmoment und/oder dem Dauerbetriebsdrehmoment die Maximaltemperatur und/oder die maximal zulässige Temperatur nicht übersteigt. Selbstverständlich kann die begrenzte Zeitspanne jedoch alternativ auch in Abhängigkeit von wenigstens einer Umgebungsgröße, insbesondere der Umgebungstemperatur, ermittelt werden.

Gemäß der Erfindung ist vorgesehen, dass die begrenzte Leistung, das begrenzte Drehmoment und/oder die begrenzte Zeitspanne in Abhängigkeit von wenigstens einer Umgebungsgröße, insbesondere der Umgebungstemperatur, ermittelt werden/wird. Auf eine derartige Vorgehensweise wurde vorstehend bereits hingewiesen. Während selbstverständlich die genannten Größen, also die begrenzte Leistung, das begrenzte Drehmoment und/oder die begrenzte Zeitspanne, konstant gewählt sein können, ist es besonders vorteilhaft, sie auf die Umgebungsbedingungen der Hybridantriebseinrichtung beziehungsweise der elektrischen Maschine abzustimmen. Dies erfolgt durch Berücksichtigung der Umgebungsgröße, als welche beispielsweise die Umgebungstemperatur herangezogen wird. Die Umgebungstemperatur wird bevorzugt mittels eines Temperatursensors bestimmt, welcher beispielsweise dem Kraftfahrzeug zugeordnet ist, jedoch vorzugsweise nicht an dasselbe Steuergerät angeschlossen ist wie der eingangs erwähnte Temperatursensor.

In einer bevorzugten Ausgestaltung der Erfindung ist vorgesehen, dass das Betreiben der elektrischen Maschine nach einem Betreiben über eine bestimmte Zeitspanne hinweg über eine bestimmte Stillstandszeit nicht zugelassen wird. Sobald also die elektrische Maschine betrieben wurde, soll ihr ausreichend Zeit bereitgestellt werden, um Wärme an ihre Umgebung abzugeben und insoweit abzukühlen. Zu diesem Zweck ist nach dem Betreiben der elektrischen Maschine, insbesondere unmittelbar nach dem Betreiben, die Stillstandszeit der elektrischen Maschine vorgesehen. Während der Stillstandszeit wird das Betreiben der elektrischen Maschine nicht zugelassen.

Eine weitere Ausgestaltung der Erfindung sieht vor, dass die Stillstandszeit in Abhängigkeit von einem Betriebsdrehmoment und/oder einer Betriebszeit während des vorhergehenden Betriebs der elektrischen Maschine ermittelt wird. Während selbstverständlich die Stillstandszeit konstant gewählt sein kann, ist es besonders vorteilhaft, sie auf wenigstens eine Betriebsgröße der elektrischen Maschine während des unmittelbar vorhergehenden Betriebs abzustimmen. Zu diesem Zweck wird die Stillstandszeit in Abhängigkeit von dem während des Betriebs verwendeten Betriebsdrehmoments, welches beispielsweise einen Mittelwert des Drehmoments über der Zeitspanne, während welcher die elektrische Maschine betrieben wird, entspricht, und/oder der Betriebszeit ermittelt. Die Betriebszeit entspricht dabei der Länge des Zeitraums, während welchem die elektrische Maschine betrieben wurde.

Eine Weiterbildung der Erfindung sieht vor, dass die elektrische Maschine in der Notfallbetriebsart als Generator zum Stützen eines Bordnetzes betrieben wird. Vorzugsweise ist die elektrische Maschine dabei elektrisch unmittelbar an das Hochvoltbordnetz des Kraftfahrzeugs angeschlossen, weist also eine Ausgangsspannung auf, welche der Spannung des Hochvoltbordnetzes entspricht. Wie bereits erläutert, ist das Hochvoltbordnetz vorzugsweise über den Spannungswandler mit dem Niedervoltbordnetz elektrisch verbunden. Das Betreiben der elektrischen Maschine als Generator wird nun derart durchgeführt, dass lediglich so viel elektrische Energie bereitgestellt wird, wie von dem Niedervoltbordnetz benötigt. Es soll insoweit in der Notfallbetriebsart kein Aufladen des Energiespeichers des Hochvoltbordnetzes erfolgen.

Schließlich kann vorgesehen sein, dass die elektrische Maschine in der Notfallbetriebsart zum Starten der Brennkraftmaschine verwendet wird. In der Notfallbetriebsart reicht die Leistung beziehungsweise das Drehmoment, welches noch mittels der elektrischen Maschine erzeugt werden kann, üblicherweise nicht aus, um einen zufriedenstellenden Fahrbetrieb des Kraftfahrzeugs durchzuführen. Aus diesem Grund soll die elektrische Maschine zum Starten der Brennkraftmaschine herangezogen werden. Zu diesem Zweck wird die Wirkverbindung zwischen der elektrischen Maschine und der Brennkraftmaschine hergestellt, vorzugsweise mittels der Kupplung. Beispielsweise wird die Brennkraftmaschine mittels der elektrischen Maschine unmittelbar nach einem Beginn der Notfallbetriebsart, also vorzugsweise bei einem Umschalten aus der Normalbetriebsart in die Notfallbetriebsart, durchgeführt.

Die Erfindung betrifft weiterhin eine Hybridantriebsantriebseinrichtung, insbesondere zur Durchführung des vorstehend beschriebenen Verfahrens, wobei die Hybridantriebseinrichtung eine Brennkraftmaschine sowie eine mit der Brennkraftmaschine wirkverbindbare oder wirkverbundene, als Motor und als Generator betreibbare elektrische Maschine aufweist, wobei in einer Normalbetriebsart eine Temperatur der elektrischen Maschine mittels eines Temperatursensors ermittelt wird. Dabei ist vorgesehen, dass ein Betrieb der elektrischen Maschine nur dann zugelassen wird, wenn die Temperatur kleiner als eine vorgegebene Maximaltemperatur ist, wobei die Hybridantriebseinrichtung dazu ausgebildet ist, bei einem Defekt des Temperatursensors eine Notfallbetriebsart durchzuführen, in welcher ein Betrieb der elektrischen Maschine nur mit begrenzter Leistung, begrenztem Drehmoment und/oder über eine begrenzte Zeitspanne zugelassen wird, wobei die begrenzte Leistung, das begrenzte Drehmoment und/oder die begrenzte Zeitspanne in Abhängigkeit von wenigstens einer Umgebungsgrößer ermittelt werden/wird.

Auf die Vorteile einer derartigen Vorgehensweise beziehungsweise einer derartigen Ausgestaltung der Hybridantriebseinrichtung wurde bereits hingewiesen. Sowohl das Verfahren als auch die Hybridantriebseinrichtung können den vorstehenden Ausführungen weitergebildet sein, sodass insoweit auf diese verweisen wird.

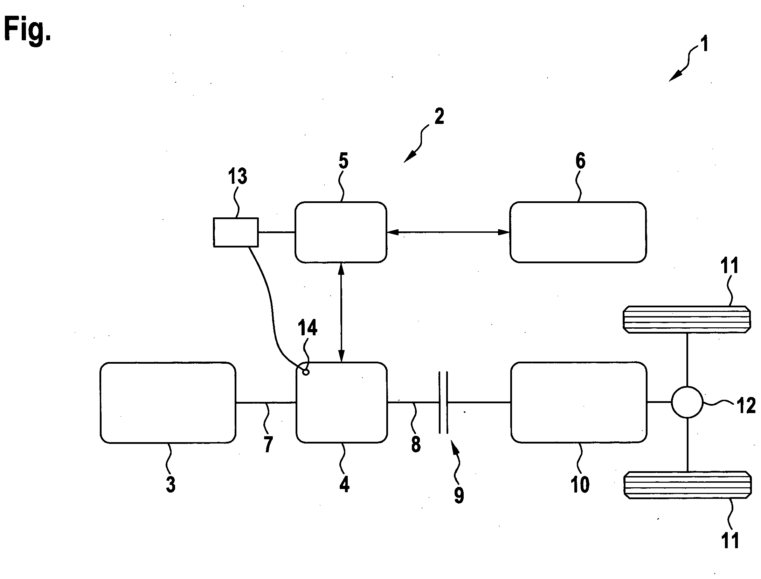

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Antriebsstrangs eines Kraftfahrzeugs mit einer Hybridantriebseinrichtung.

Die Figur zeigt eine schematische Darstellung eines Antriebsstrangs 1 eines nicht näher dargestellten Kraftfahrzeugs, welcher eine Hybridantriebseinrichtung 2 aufweist. Die Hybridantriebseinrichtung 2 verfügt über eine Brennkraftmaschine 3 sowie eine elektrische Maschine 4, wobei letztere über eine Leistungselektronik 5 an einen Energiespeicher 6 beziehungsweise ein Hochvoltbordnetz angeschlossen ist. Die Brennkraftmaschine 3 und die elektrische Maschine 4 sind in der hier dargestellten Ausführungsform über eine Verbindungswelle 7 starr miteinander gekoppelt. Selbstverständlich kann in der Verbindungswelle 7 und mithin in der Wirkverbindung zwischen der Brennkraftmaschine 3 und der elektrischen Maschine 4 eine Trennkupplung (nicht dargestellt) vorgesehen sein, um die Brennkraftmaschine 3 von der elektrischen Maschine 4 zu entkoppeln.

Die elektrische Maschine 4 ist bevorzugt starr und/oder permanent mit einer Ausgangswelle 8 der Hybridantriebseinrichtung 2 gekoppelt. Diese ist über eine Anfahrkupplung 9 mit einem Schaltgetriebe 10 des Antriebsstrangs 1 gekoppelt. Über das Schaltgetriebe 10 ist eine Wirkverbindung zwischen der Anfahrkupplung 9 und Rädern 11 des Antriebsstrangs 1 beziehungsweise des Kraftfahrzeugs hergestellt. In der Wirkverbindung kann zwischen dem Schaltgetriebe 10 und den Rädern 11 ein Differentialgetriebe 12 vorliegen.

Die elektrische Maschine 4 beziehungsweise die Leistungselektronik 5 wird mittels eines Steuergeräts 13 angesteuert. An dieses ist ein Temperatursensor 14 der elektrischen Maschine 4 angeschlossen. In einer Normalbetriebsart der Hybridantriebseinrichtung 2 ist nun vorgesehen, dass eine Temperatur der elektrischen Maschine 4 mittels des Temperatursensors 14 ermittelt wird. Ein Betrieb der elektrischen Maschine 4 wird nur dann zugelassen, wenn die Temperatur kleiner als eine vorgegebene Maximaltemperatur ist. Zusätzlich oder alternativ kann es vorgesehen sein, dass das Steuergerät 13 lediglich eine Leistung zulässt, welche kleiner ist als eine Maximalleistung, die insbesondere aus der mittels des Temperatursensors 14 bestimmten Temperatur errechnet wird. Analog kann für das Drehmoment der elektrischen Maschine 4 vorgegangen werden, wobei ein Maximaldrehmoment aus der Temperatur bestimmt wird.

Wird nun ein Defekt des Temperatursensors 14 festgestellt, insbesondere mittels des Steuergeräts 13, so wird aus der Normalbetriebsart in eine Notfallbetriebsart umgeschaltet. In dieser wird ein Betrieb der elektrischen Maschine 4 nur mit begrenzter Leistung, begrenztem Drehmoment und/oder über eine bestimmte Zeitspanne hinweg zugelassen. Mit einer solchen Vorgehensweise soll eine zu hohe Temperatur der elektrischen Maschine 4 verhindert, jedoch gleichzeitig zumindest ein begrenzter Betrieb der elektrischen Maschine 4 zugelassen werden. In der Notfallbetriebsart wird beispielsweise die elektrische Maschine 4 zum Starten der Brennkraftmaschine 3 herangezogen. Zusätzlich oder alternativ kann die elektrische Maschine 4 als Generator zum Stützen des Bordnetzes herangezogen werden. Insoweit ist trotz des defekten Temperatursensors 14 zumindest ein eingeschränkter Fahrbetrieb des Kraftfahrzeugs möglich.

## Patentansprüche

1. Verfahren zum Betreiben einer Hybridantriebseinrichtung (2), die eine Brennkraftmaschine (3) sowie eine mit der Brennkraftmaschine (3) wirkverbindbare oder wirkverbundene, als Motor und als Generator betreibbare elektrische Maschine (4) aufweist, wobei in einer Normalbetriebsart eineTemperatur der elektrischen Maschine (4) mittels eines Temperatursensors (14) ermittelt wird, **dadurch gekennzeichnet, dass** ein Betrieb der elektrischen Maschine (4) nur dann zugelassen wird, wenn die Temperatur kleiner als eine vorgegebene Maximaltemperatur ist, wobei bei einem Defekt des Temperatursensors (14) eine Notfallbetriebsart durchgeführt wird, in welcher ein Betrieb der elektrischen Maschine (4) nur mit begrenzter Leistung, begrenztem Drehmoment und/oder über eine begrenzte Zeitspanne zugelassen wird, wobei die begrenzte Leistung, das begrenzte Drehmoment und/oder die begrenzte Zeitspanne in Abhängigkeit von wenigstens einer Umgebungsgröße ermittelt werden/wird.

2. Verfahren nach Anspruch 1, **dadurch gekennzeichnet, dass** bei Vorliegen eines Zündanlassschalters in einer Normalbetriebsstellung in der Notfallbetriebsart ein Abschalten der Brennkraftmaschine (3) unterbunden wird.

3. Verfahren nach einem der vorhergehenden Ansprüche, **dadurch gekennzeichnet, dass** das begrenzte Drehmoment kleiner ist als ein Maximaldrehmoment und/oder ein Dauerbetriebsdrehmoment der elektrischen Maschine (4).

4. Verfahren nach einem der vorhergehenden Ansprüche, **dadurch gekennzeichnet, dass** die begrenzte Zeitspanne derart gewählt wird, dass auch bei einem Betreiben der elektrischen Maschine (4) mit dem Maximaldrehmoment die Temperatur der elektrischen Maschine (4) kleiner als die Maximaltemperatur bleibt.

5. Verfahren nach einem der vorhergehenden Ansprüche, **dadurch gekennzeichnet, dass** das Betreiben der elektrischen Maschine (4) nach einem Betreiben über eine bestimmte Zeitspanne hinweg über eine bestimmte Stillstandszeit nicht zugelassen wird.

6. Verfahren nach einem der vorhergehenden Ansprüche, **dadurch gekennzeichnet, dass** die Stillstandszeit in Abhängigkeit von einem Betriebsdrehmoment und/oder eine Betriebszeit während des vorhergehenden Betriebs der elektrischen Maschine (4) ermittelt wird.

7. Verfahren nach einem der vorhergehenden Ansprüche, **dadurch gekennzeichnet, dass** die elektrische Maschine (4) in der Notfallbetriebsart als Generator zum Stützen eines Bordnetzes betrieben wird.

8. Verfahren nach einem der vorhergehenden Ansprüche, **dadurch gekennzeichnet, dass** die elektrische Maschine (4) in der Notfallbetriebsart zum Starten der Brennkraftmaschine (3) verwendet wird.

9. Hybridantriebseinrichtung (2), insbesondere zur Durchführung des Verfahrens nach einem oder mehreren der vorhergehenden Ansprüche, wobei die Hybridantriebseinrichtung (2) eine Brennkraftmaschine (3) sowie eine mit der Brennkraftmaschine (3) wirkverbindbare oder wirkverbundene, als Motor und als Generator betreibbare elektrische Maschine (4) aufweist, wobei in einer Normalbetriebsart eine Temperatur der elektrischen Maschine (4) mittels eines Temperatursensors (14) ermittelt wird, **dadurch gekennzeichnet, dass** ein Betrieb der elektrischen Maschine (4) nur dann zugelassen wird, wenn die Temperatur kleiner als eine vorgegebene Maximaltemperatur ist, wobei die Hybridantriebseinrichtung (2) dazu ausgebildet ist, bei einem Defekt des Temperatursensors (14) eine Notfallbetriebsart durchzuführen, in welcher ein Betrieb der elektrischen Maschine (4) nur mit begrenzter Leistung, begrenztem Drehmoment und/oder über eine begrenzte Zeitspanne zugelassen wird, wobei die begrenzte Leistung, das begrenzte Drehmoment und/oder die begrenzte Zeitspanne in Abhängigkeit von wenigstens einer Umgebungsgröße ermittelt werden/wird.

## Claims

1. Method for operating a hybrid drive system (2), comprising an internal combustion engine (3) and an electric machine (4) which is or can be operatively connected to the internal combustion engine (3) and can be operated as a motor and as a generator, wherein in a normal operating mode a temperature of the electric machine (4) is determined by means of a temperature sensor (14), **characterised in that** an operation of the electric machine (4) is only permitted when the temperature is less than a predetermined maximum temperature, wherein in the event of a defect of the temperature sensor (14) an emergency operating mode is carried out, in which operation of the electric machine (4) is only permitted with limited power, limited torque and/or for a limited time period, wherein the limited output, the limited torque and/or the limited time period are/is determined as a function of at least one environmental variable.

2. Method according to claim 1, **characterised in that**, when an ignition starter switch is in a normal operating position, a shutdown of the internal combustion engine (3) is prevented in the emergency operating mode.

3. Method according to any of the preceding claims, **characterised in that** the limited torque is less than a maximum torque and/or a continuous torque of the electric machine (4).

4. Method according to any of the preceding claims, **characterised in that** the limited time period is selected in such a way that, even when the electric machine (4) is operated with the maximum torque, the temperature of the electric machine (4) remains less than the maximum temperature.

5. Method according to any of the preceding claims, **characterised in that**, after operation of the electric machine (4) for a specific time period, operation of the electric machine is not permitted for a specific shutdown time.

6. Method according to any of the preceding claims, **characterised in that** the shutdown time is determined as a function of an operating torque and/or an operating time during the preceding operation of the electric machine (4).

7. Method according to any of the preceding claims, **characterised in that** the electric machine (4) is operated in the emergency operating mode as a generator for supporting an on-board electrical system.

8. Method according to any of the preceding claims, **characterised in that** the electric machine (4) is operated in the emergency operating mode as a generator for starting the internal combustion engine (3).

9. Hybrid drive device (2), in particular for carrying out the method according to one or more of the preceding claims, wherein the hybrid drive device (2) comprises an internal combustion engine (3) and an electric machine (4) which is or can be operatively connected to the internal combustion engine (3) and can be operated as a motor and as a generator, wherein in a normal operating mode a temperature of the electric machine (4) is determined by means of a temperature sensor (14), **characterised in that** an operation of the electric machine (4) is only permitted when the temperature is less than a predetermined maximum temperature, wherein the hybrid drive device (2) is designed in order that, in the event of a defect of the temperature sensor (14), an emergency operating mode is carried out, in which operation of the electric machine (4) is only permitted with limited power, limited torque and/or for a limited time period, wherein the limited output, the limited torque and/or the limited time period are/is determined as a function of at least one environmental variable.

## Revendications

1. Procédé pour faire fonctionner un dispositif d'entraînement hybride (2) qui a un moteur à combustion interne (3) ainsi qu'un moteur électrique (4) qui peut être connecté fonctionnellement ou est connecté fonctionnellement au moteur à combustion interne (3) et peut fonctionner en tant que moteur et en tant que générateur, dans lequel dans un mode de fonctionnement normal, une température du moteur électrique (4) est déterminée au moyen d'un capteur de température (14), **caractérisé en ce qu'**un fonctionnement du moteur électrique (4) n'est autorisé que lorsque la température est inférieure à une température maximale prédéterminée, dans lequel un mode de fonctionnement d'urgence est exécuté en cas de défaut du capteur de température (14), dans lequel un fonctionnement du moteur électrique (4) n'est autorisé qu'avec une puissance limitée, un couple limité et/ou sur une période de temps limitée, dans lequel la puissance limitée, le couple limité et/ou la période de temps limitée est/sont déterminé(s) en fonction d'au moins une variable environnementale.

2. Procédé selon la revendication 1, **caractérisé en ce que** lorsqu'un commutateur d'allumage est présent dans une position de fonctionnement normale en mode de fonctionnement d'urgence, le moteur à combustion interne (3) ne peut pas être arrêté.

3. Procédé selon l'une des revendications précédentes, **caractérisé en ce que** le couple limité est inférieur à un couple maximal et/ou à un couple de fonctionnement continu du moteur électrique (4).

4. Procédé selon l'une des revendications précédentes, **caractérisé en ce que** la période de temps limitée est choisie de telle sorte que même lors du fonctionnement du moteur électrique (4) avec le couple maximal, la température du moteur électrique (4) reste inférieure à la température maximale.

5. Procédé selon l'une des revendications précédentes, **caractérisé en ce que** le fonctionnement du moteur électrique (4) après un fonctionnement pendant une période de temps définie n'est pas autorisé pendant un temps d'arrêt défini.

6. Procédé selon l'une des revendications précédentes, **caractérisé en ce que** le temps d'arrêt est déterminé en fonction d'un couple de fonctionnement et/ou d'un temps de fonctionnement lors du fonctionnement précédent du moteur électrique (4).

7. Procédé selon l'une des revendications précédentes, **caractérisé en ce que** le moteur électrique (4) fonctionne en mode de fonctionnement d'urgence comme générateur pour supporter un réseau de bord.

8. Procédé selon l'une des revendications précédentes, **caractérisé en ce que** la machine électrique (4) est utilisée en mode de fonctionnement d'urgence pour démarrer le moteur à combustion interne (3).

9. Dispositif d'entraînement hybride (2), en particulier pour mettre en œuvre le procédé selon une ou plusieurs des revendications précédentes, dans lequel le dispositif d'entraînement hybride (2) a un moteur à combustion interne (3) ainsi qu'un moteur électrique (4) qui peut être connecté fonctionnellement ou est connecté fonctionnellement au moteur à combustion interne (3) en tant que moteur et en tant que générateur, dans lequel dans un mode de fonctionnement normal, une température du moteur électrique (4) est déterminée au moyen d'un capteur de température (14), **caractérisé en ce qu'**un fonctionnement du moteur électrique (4) n'est autorisé que lorsque la température est inférieure à une température maximale prédéterminée, dans lequel le dispositif d'entraînement hybride (2) est conçu de sorte qu'un mode de fonctionnement d'urgence est exécuté en cas de défaut du capteur de température (14), dans lequel un fonctionnement du moteur électrique (4) n'est autorisé qu'avec une puissance limitée, un couple limité et/ou sur une période de temps limitée, dans lequel la puissance limitée, le couple limité et/ou la période de temps limitée est/sont déterminé(s) en fonction d'au moins une variable environnementale.
